Europäisches Patentamt

European Patent Office

Office européen des brevets

(11) Numéro de publication: **0 424 227 A1**

# DEMANDE DE BREVET EUROPEEN

(21) Numéro de dépôt: 90402866.9

(22) Date de dépôt: 15.10.90

(51) Int. Cl.5: **G01B 21/26**

(30) Priorité: 18.10.89 FR 8913588

(43) Date de publication de la demande:
**24.04.91 Bulletin 91/17**

(84) Etats contractants désignés:
**DE ES GB IT**

(71) Demandeur: **ETABLISSEMENTS M. MULLER & CIE.**
**2, Avenue de la Trentaine Zone Industrielle**
**F-77500 Chelles(FR)**

(72) Inventeur: **Coetsier, Paul**
**22, avenue Alphonse Lint**
**F-77400 Lagny Sur Marne(FR)**
Inventeur: **Douine, Denis**
**1, avenue Deholain**
**F-77400 Lagny Sur Marne(FR)**

(74) Mandataire: **Tony-Durand, Serge**
**Cabinet Tony-Durand 77, rue Boissière**
**F-75116 Paris(FR)**

(54) Appareil de contrôle de géométrie de roues d'un véhicule.

(57) L'invention concerne un appareil de contrôle de la géométrie des roues d'un véhicule.

L'appareil comporte un bâti (5, 6, 7 ou 8) solidaire de chaque roue (1, 2, 3 ou 4) et des capteurs de menus angulaires (27) sur chaque bâti pour fournir pour chaque roue des signaux représentatifs des valeurs des paramètres angulaires à mesurer. Ces signaux sont traités par un ensemble de traitement (9). Selon l'invention, l'ensemble de traitement (9) est un terminal portable qui peut être relié par un bus (10) à un connecteur spécifique (32) proche du bâti (5) de la roue contrôlée (1), ou à l'un des connecteurs supplémentaires (39, 40 ou 41) des autres bâtis (6, 7 ou 8) proches des autres roues (2, 3 ou 4). Des bus d'interconnexion (11, 12 ou 13) des connecteurs des différents bâtis, permettent cette connexion indifférenciée du terminal (9) sur un connecteur de l'une quelconque des roues.

Application au contrôle d'organes fonctionnels de véhicules.

FIG. 2

## APPAREIL DE CONTRÔLE DE GÉOMÉTRIE DE ROUES D'UN VÉHICULE

La présente invention concerne un appareil de contrôle de géométrie de roues d'un véhicule. Elle s'applique aux contrôles automatiques des organes fonctionnels essentiels d'un véhicule, et plus particulièrement aux contrôles automatiques de la géométrie des roues.

On sait que le contrôle de la géométrie des roues d'un véhicule porte essentiellement sur les mesures des valeurs des paramètres angulaires suivants :
- l'angle de parallélisme des roues avant et arrière,
- l'angle de décalage des roues sur l'essieu avant,
- l'angle de carrossage des roues avant et arrière,
- l'angle de chasse des roues avant,
- l'angle de pivot des roues avant,
- l'angle de divergence de braquage des roues avant.

Dans l'état actuel de la technique, ces différents angles sont mesurés grâce à des montages opto-électroniques ou potentiométriques, ou par des inclinomètres comportant des capteurs, solidaires de bâtis fixés aux roues. Ces montages fournissent des signaux respectivement représentatifs des valeurs des différents paramètres angulaires à mesurer. Ces signaux sont transmis à une unité centrale fixe de traitement, pour être traités et pour obtenir les valeurs des paramètres angulaires caractéristiques. Le bati correspondant à chaque roue comporte un connecteur relié aux sorties des capteurs correspondants. L'unité centrale est alors reliée à des connecteurs proches des bâtis, pour recevoir tous les signaux des capteurs, pour chaque roue. Ces signaux sont traités pour obtenir les valeurs de tous les paramètres angulaires pour chaque roue. Un terminal relié à l'unité centrale permet de commander l'écriture par une imprimante, de l'ensemble des valeurs de tous les paramètres angulaires, ou simplement de certaines de ces valeurs.

Ce type d'appareillage connu a pour inconvénient essentiel d'exiger des connexions fastidieuses de l'unité centrale pour chaque banc de contrôle de géométrie des roues d'un véhicule. L'opérateur chargé du contrôle, après avoir connecté l'unité aux connecteurs proches des roues, doit retourner vers le terminal de commande, souvent proche de l'unité centrale, pour diriger les mesures. Ainsi l'opérateur ne peut pas rester à proximité du véhicule, alors qu'il est souvent nécessaire d'intervenir sur celui-ci, par exemple pour tourner le volant si les mesures effectuées le nécessitent.

Un autre type d'appareillage comporte des organes de traitement et de visualisation incorporés dans chaque bâti. Ce type d'appareillage ne permet pas à l'opérateur de contrôler les résultats des mesures, notamment lorsque pour les besoins des contrôles à effectuer, cet opérateur est allongé sous le véhicule.

L'invention a pour but de remédier à ces inconvénients grâce à un appareil très perfectionné qui permet à tout opérateur, chargé du contrôle de géométrie des roues d'un véhicule, de sélectionner les mesures souhaitées et de les visualiser, tout en restant à proximité du véhicule, sans avoir à se déplacer vers un terminal proche d'une unité centrale, mais distant du véhicule. Elle permet aussi de partager l'utilisation d'une unité centrale et/ou d'un terminal de visualisation, avec différents bancs de contrôle des organes fonctionnels essentiels d'un ou plusieurs véhicules.

Ces buts sont atteints, notamment grâce à des bus locaux d'interconnexion. En effet, des signaux de mesures fournis par des capteurs (potentiométriques ou opto-électroniques, ou inclinomètres), solidaires d'un bâti fixé à une roue prédéterminée, peuvent être obtenus, par exemple sur un connecteur solidaire de ce bâti, mais aussi sur un connecteur solidaire d'un bâti d'une autre roue, grâce à ces bus locaux d'interconnexion. Ces connecteurs peuvent être reliés à un terminal portable de commande et de traitement qui permet, tout en restant proche des organes du véhicule à contrôler, d'effectuer des mesures de paramètres angulaires pour une roue prédéterminée. Le terminal portable permet également de sélectionner un ou plusieurs des paramètres angulaires à mesurer, et de visualiser immédiatement ces valeurs qui sont alors transmises à des moyens éloignés de visualisation et d'impression, reliés à un circuit de gestion qui peut être relié à d'autres bancs ou stations de contrôle, ou à un ordinateur central.

L'invention a pour objet un appareil de contrôle de géométrie de roues d'un véhicule, par mesure de valeurs de paramètres caractéristiques de la géométrie de chaque roue, comportant pour chaque roue, un bâti fixé à cette roue, des capteurs solidaires du bâti et fournissant respectivement sur des sorties, des signaux représentatifs des valeurs des paramètres caractéristiques de la roue, et un ensemble de commande et de traitement indépendant de chaque bâti et connectable auxdites sorties des capteurs pour recevoir lesdits signaux représentatifs et pour obtenir lesdites valeurs de paramètres caractéristiques pour chaque roue. Cet appareil est caractérisé en ce que :
- pour chaque bâti, il comporte un multiplexeur relié aux sorties des capteurs correspondant à ce bâti, un connecteur spécifique du bâti, relié au multiplexeur pour recevoir lesdits signaux spécifiques relatifs à la roue correspondante, chaque connecteur spécifique d'un bâti étant relié à un connecteur supplémentaire de chaque bâti de chaque autre roue, par un bus bidirectionnel d'interconnexion,

- l'ensemble de commande et de traitement est connecté par un bus de connexion, soit directement à un connecteur spécifique d'un bâti d'une roue prédéterminée, soit indirectement à ce connecteur spécifique de la roue prédéterminée, par la connexion du bus de connexion à l'un quelconque des connecteurs supplémentaires des autres roues,

- cet ensemble de commande et de traitement transmet, au multiplexeur correspondant à la roue prédéterminée, des signaux de commande de sélection d'un ou plusieurs desdits signaux représentatifs des valeurs respectives de paramètres caractéristiques de la roue prédéterminée, et recevant ce ou ces signaux représentatifs pour les traiter et obtenir les valeurs des paramètres caractéristiques correspondants.

Selon une autre caractéristique de l'invention, l'ensemble de traitement comporte un terminal de commande et de traitement portable, à microprocesseur incorporé, à écran de visualisation et à clavier de commande et de traitement, ce microprocesseur étant connectable par ledit bus de connexion, soit à un connecteur spécifique d'une roue prédéterminée, soit à un connecteur supplémentaire d'une autre roue pour transmettre au multiplexeur de la roue prédéterminée, des signaux de commande de sélection, et pour recevoir et traiter des signaux représentatifs de valeurs de paramètres caractéristiques de la roue prédéterminée et obtenir ces valeurs.

Selon une autre caractéristique, le connecteur spécifique et les connecteurs supplémentaires de chaque bâti sont reliés à un connecteur principal, l'appareil comportant en outre un circuit de gestion connectable au connecteur principal d'un bâti, par un bus principal, pour recevoir et enregistrer les valeurs de paramètres fournies par le microprocesseur du terminal de commande et de traitement, ce circuit de gestion étant en outre relié à une imprimante pour imprimer lesdites valeurs, et étant connectable à d'autres appareils de contrôle de véhicules ou à un ordinateur central.

Selon une autre caractéristique, l'appareil comporte en outre un terminal de visualisation à écran, relié au circuit de gestion pour afficher des menus déroulants d'opérations de contrôle de géométrie à effectuer, ces menus étant déroulés et un menu étant sélectionné par un moyen de télécommande du terminal de visualisation, tout menu sélectionné étant transmis au terminal portable de commande et de traitement pour être affiché sur l'écran de ce terminal de commande et de traitement.

Selon une autre caractéristique, l'appareil comporte en outre un terminal esclave portable, à écran de visualisation et à clavier de dialogue, connectable par un bus de connexion à un connecteur d'une roue relié par ledit bus de connexion à un connecteur d'une autre roue auquel est connecté ledit terminal de commande et de traitement, l'écran de visualisation du terminal esclave portable affichant des données affichées, sur l'écran de visualisation du terminal de commande et de traitement, et le clavier du terminal esclave commandant le dialogue avec le terminal de commande et de traitement.

Les caractéristiques et avantages de l'invention ressortiront mieux de la description qui va suivre, donnée en référence aux dessins annexés, dans lesquels :

La figure 1 représente schématiquement les quatre roues d'un véhicule et les moyens essentiels de l'appareil de l'invention.

La figure 2 représente schématiquement, mais de manière plus détaillée, des connecteurs et des bus intervenant dans l'appareil de l'invention. Elle permet de mieux comprendre le fonctionnement de l'appareil de l'invention.

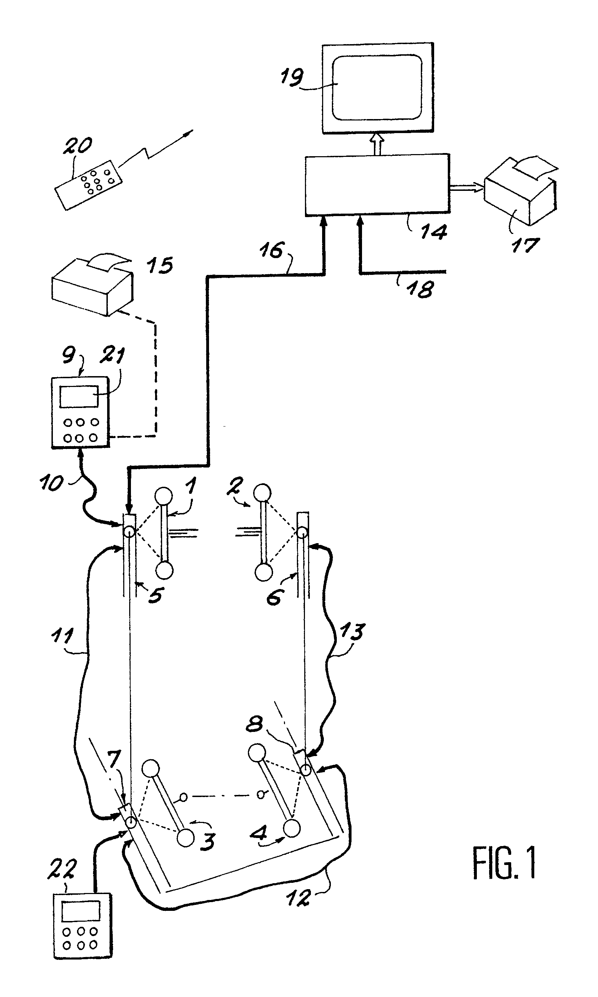

La figure 1 représente schématiquement un appareil de contrôle de géométrie de roues 1, 2, 3, 4 d'un véhicule conforme à l'invention. Sur cette figure, les roues 1, 2 sont les roues avant, tandis que les roues 3, 4 sont les roues arrière du véhicule. Les angles de parallélisme, de carrossage, de chasse, de pivot et de divergence de braquage, mentionnés plus haut, ne seront pas décrits ici en détail car ils sont bien connus dans l'état de la technique. Ce sont les valeurs de ces angles, qualifiés de paramètres angulaires, qui sont mesurées et contrôlées, en totalité ou en partie, selon le choix de l'opérateur, par l'appareil de l'invention. Sur la figure, les roues sont représentées en exemple, en position braquée.

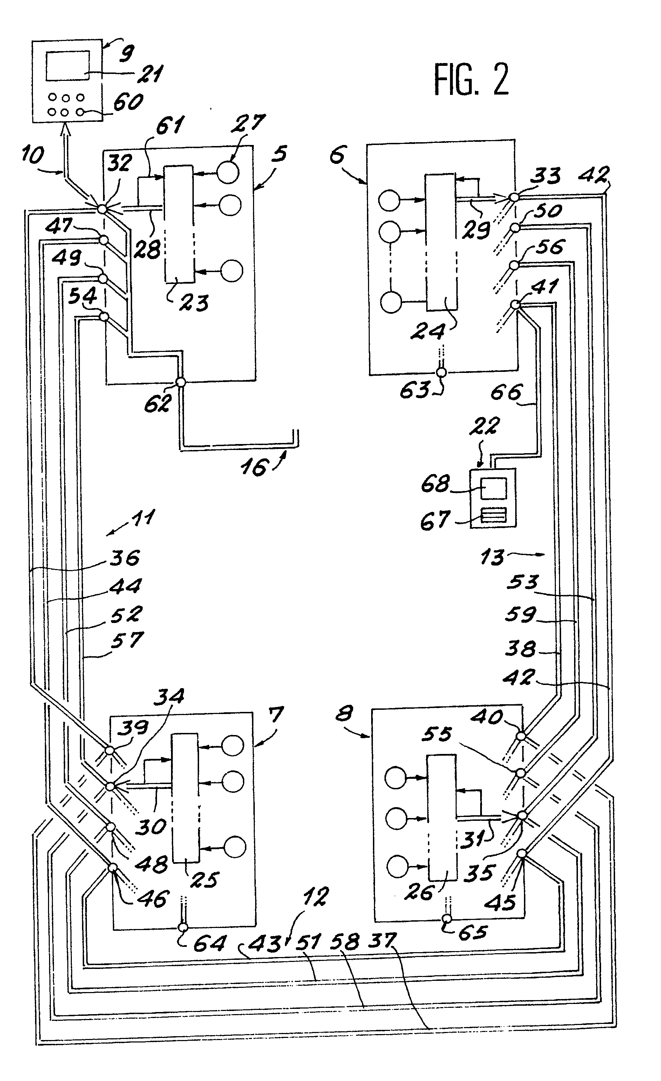

Pour chaque roue, l'appareil comporte un bâti fixé à la roue et des capteurs (opto-électroniques, ou potentiométriques, ou inclinomètres, par exemple) solidaires du bâti et fournissant, sur des sorties, des signaux représentatifs des valeurs des paramètres angulaires caractéristiques de la roue. Sur la figure les bâtis supportant ces capteurs sont respectivement représentés en 5, 6, 7, 8 pour les roues 1, 2, 3, 4. Les moyens de fixation de chaque bâti sur la roue correspondante, ne sont pas représentés en détail sur la figure. Les capteurs n'apparaissent pas non plus sur cette figure. Ils seront décrits plus loin, en relation avec la figure 2.

L'appareil de la figure 1 comporte aussi un ensemble 9 de commande et de traitement, indépendant de chaque bâti. Cet ensemble 9 est connectable aux sorties des capteurs de l'un ou l'autre des bâtis pour recevoir, de ces capteurs, les signaux représentatifs des valeurs des paramètres angulaires à mesurer, pour traiter ces signaux, et pour obtenir ces valeurs de paramètres.

L'ensemble 9 de commande et de traitement est, comme on le verra plus loin en détail, un terminal portable à microprocesseur incorporé, à écran de visualisation 21 (à cristaux liquides par exemple) et à clavier de commande et de traitement. L'appareil comporte aussi un bus 10 de connexion de l'ensemble de traitement 9 aux capteurs de l'un ou l'autre des bâtis, et des bus bidirectionnels d'interconnexion 11, 12, 13. Le rôle de ces bus sera décrit ultérieurement. Enfin, l'appareil représenté sur la figure, comporte un circuit de gestion 14 qui peut être mis en communication avec le terminal 9, grâce à un bus principal 16, par exemple pour commander la visualisation ou l'impression des valeurs des paramètres angulaires mesurés. A cet effet, une imprimante 17, et un terminal de visualisation à écran 19, sont reliés au circuit de gestion 14. Ce circuit peut aussi être relié à d'autres bancs ou d'autres stations de contrôle d'organes fonctionnels du véhicule et/ou à un ordinateur central, par d'autres bus principaux, tels que le bus 18 par exemple. L'impression des valeurs des paramètres mesurés par le terminal 9, peut aussi être obtenue directement en reliant le bus 10 de ce terminal à une imprimante 15. Le terminal de visualisation à écran 19, relié au circuit de gestion 14, peut aussi afficher des menus déroulants, relatifs aux opérations de contrôle de géométrie qu'il est possible d'effectuer. Ces menus sont déroulés, et un menu est sélectionné, par un moyen de télécommande 20 (télécommande infrarouge par exemple), ou par le clavier du terminal portable 9 ou par le clavier d'un terminal esclave 22. Tout menu sélectionné est transmis au terminal portable 9 pour être affiché sur l'écran de visualisation 21 de ce terminal. Cette transmission est effectuée, comme on le verra plus loin en détail, par le bus principal 16 et par le bus de connexion 10. Le terminal portable 22 qualifié de terminal esclave est aussi représenté sur cette figure. Son rôle sera expliqué ultérieurement. Les menus déroulants proviennent par exemple de l'ordinateur central (non représenté) relié par le bus 18, au circuit de gestion 14.

La figure 2 représente schématiquement et de manière plus détaillée certains des éléments essentiels de l'appareil de l'invention. Les mêmes éléments portent les mêmes références sur cette figure et sur la figure 1.

Pour chaque bâti de chaque roue, l'appareil comporte un multiplexeur analogique. Les multiplexeurs correspondant respectivement aux bâtis 5, 6, 7, 8 sont représentés en 23, 24, 25, 26 sur la figure. Chaque multiplexeur est relié aux sorties de capteurs pour recevoir les signaux représentatifs des valeurs des paramètres relatifs à la géométrie de la roue correspondante. C'est ainsi que le multiplexeur 23 est relié aux sorties des capteurs 27, pour recevoir des signaux représentatifs des valeurs des paramètres angulaires de la roue 1. Ces signaux multiplexés sont fournis séparément sur une sortie du multiplexeur. Pour le multiplexeur 23, cette sortie est représentée en 28, tandis que pour les autres multiplexeurs, ces sorties sont respectivement représentées en 29, 30, 31.

Chaque signal fourni par le multiplexeur est appliqué à un connecteur spécifique pour chaque bâti. Ces connecteurs spécifiques sont respectivement représentés en 32, 33, 34, 35 pour les sorties 28, 29, 30, 31 des multiplexeurs. Chaque connecteur spécifique d'un bâti est relié à un connecteur supplémentaire correspondant à chaque bâti de chaque autre roue par une ligne d'un bus bidirectionnel d'interconnexion. Les bus bidirectionnels des différentes roues sont les bus 11, 12, 13 de la figure 1. Ils sont représentés ici de manière plus détaillée. C'est ainsi que le connecteur spécifique 32 du bâti 5, qui reçoit les signaux du multiplexeur 23, est relié par des lignes 36, 37, 38 des bus 11, 12, 13, aux connecteurs supplémentaires 39, 40, 41 correspondant respectivement aux bâtis 5, 7, 8, 6. De la même manière, le connecteur spécifique 33 du bâti 6, est relié par des lignes 42, 43, 44 des bus bidirectionnels d'interconnexion 13, 12, 11 à des connecteurs supplémentaires 45, 46, 47 correspondant respectivement aux bâtis 8, 7, 5.

Le connecteur spécifiques 35 du bâti 8 est relié aux connecteurs supplémentaires 48, 49, 50 et des bâtis 7, 5, 6, par les lignes 51, 52, 53, des bus d'interconnexion 12, 11, 13. Enfin, le connecteur spécifique 34 du bâti 7 est relié aux connecteurs supplémentaires 54, 55, 56 des bâtis 5, 8, 6 par les lignes 57, 58, 59 des bus d'interconnexion 11, 12, 13.

L'ensemble de commande et de traitement, constitué par le terminal portable 9, est connecté par le bus de connexion 10, soit directement à un connecteur spécifique d'une roue prédéterminée, soit indirectement à ce connecteur spécifique, grâce à la connexion du bus 10 à un connecteur supplémentaire de l'une quelconque des autres roues.

C'est ainsi que dans l'exemple représenté sur la figure, le terminal 9 peut être relié, par le bus 10, au connecteur spécifique 32 du bâti 5, correspondant à la roue 1 par exemple, pour recevoir les signaux du multiplexeur 23. Ces mêmes signaux peuvent être reçus par le terminal 9 si celui-ci est relié par le bus 10, à l'un quelconque des connecteurs supplémentaires 39, 40, 41 des bâtis 7, 8, 6 correspondant respectivement aux roues 3, 4, 2. Ainsi, l'opérateur peut connecter le terminal portable 9 sur le connecteur le plus proche de l'emplacement où il effectue une opération de réglage par exemple.

Le terminal 9 transmet des signaux de commande de sélection appropriés au multiplexeur correspondant à la roue pour laquelle des mesures sont effectuées, pour sélectionner, parmi les signaux de mesures fournis par les capteurs reliés à ce multiplexeur, un ou plusieurs de ces signaux de mesures selon le choix de mesures à effectuer. Ces signaux de commande sont fournis par l'appui de touches appropriées sur le clavier 60 du terminal 9, et sont transmis à une entrée de commande, telle que 61 du multiplexeur approprié.

Le choix des paramètres à mesurer peut être indiqué par le menu déroulant affiché sur l'écran 61 du terminal 9. Ce menu déroulant apparait également sur l'écran du terminal de visualisation 19, relié au circuit de gestion 14. Le déroulement des menus est commandé, comme indiqué plus haut, par le moyen de télécommande 20 ou par l'un des claviers des terminaux portables 9, 22.

Le terminal portable 9 reçoit les signaux analogiques représentatifs des valeurs des paramètres angulaires sélectionnés pour la roue prédéterminée 1 par exemple. Ce terminal comporte bien entendu un convertisseur analogique-numérique (non représenté sur la figure). Les signaux analogiques ainsi convertis en signaux numériques sont traités par le microprocesseur du terminal pour obtenir les valeurs correspondantes des paramètres angulaires sélectionnés.

Ces valeurs de paramètres angulaires peuvent alors être transmises au circuit de gestion 14 pour être imprimées sur une feuille de contrôle par exemple, par l'imprimante 17, ou pour être transmises, à travers le bus 18, à l'ordinateur central non représenté.

A cet effet, le connecteur spécifique et les connecteurs supplémentaires de chaque bâti sont reliés à un connecteur principal qui peut être relié au circuit de gestion 14, par un bus principal 16. Ces connecteurs principaux sont respectivement représentés en 62, 63, 64, 65, pour les bâtis 5, 6, 7, 8. On voit sur la figure que le connecteur principal 62 est relié au connecteur spécifique du bâti 5 et aux connecteurs supplémentaires 47, 49, 54 de ce bâti. Des liaisons identiques sont utilisées, comme représenté de manière incomplète sur la figure, pour relier les connecteurs principaux 64, 65, 66 des autrs bâtis avec les connecteurs spécifiques et supplémentaires qui leur correspondent respectivement pour ces bâtis.

Ainsi, le circuit de gestion 14 reçoit les valeurs de paramètres angulaires mesurées pour toutes les roues, lorsque le bus principal 16 est relié au connecteur principal 62, ou à l'un quelconque des autres connecteurs principaux 63, 64, 65.

Enfin, comme indiqué plus haut, l'appareil de l'invention comporte un terminal esclave portable 22. Ce terminal esclave peut être relié par un bus de connexion 66, à un connecteur d'une roue, lui même relié par le bus d'interconnexion (11, 12, 13) à un connecteur d'une autre roue, auquel est connecté le terminal 9 de commande et de traitement.

C'est ainsi que dans l'exemple représenté sur la figure, le terminal esclave 22 relié au connecteur spécifique 41 du bâti 6 de la roue 2, est aussi relié par les lignes 38, 37, 36 des bus 13, 12, 11 d'interconnexion, au connecteur 32 de la roue 1 auquel est lui-même relié le terminal 9. Le terminal esclave portable 22 pourrait être de la même manière relié au connecteur 40 ou au connecteur 39 des autres bâtis des roues 4 ou 3.

Le terminal portable 22 facilite les opérations de contrôle, car il permet à l'opérateur, par exemple lorsque le terminal 9 qui peut être qualifié de terminal maître est à proximité d'une roue du véhicule, de dialoguer avec ce terminal maître, même si l'opérateur est situé près d'une autre roue du véhicule. Ce dialogue est rendu possible par le clavier 67 du terminal esclave 22. Les informations qui apparaissent sur l'écran 21 du terminal maître 9 sont transmises au terminal esclave 22 pour être aussi affichées sur son écran 68. Les traitements de signaux fournis par les mutiplexeurs sont uniquement effectués par le terminal maître 9. Les signaux de commande de sélection appliqués à l'un des multiplexeurs sont uniquement fournis par le terminal maître 9.

## Revendications

1. Appareil de contrôle de géométrie de roues (1, 2, 3, 4) d'un véhicule, par mesure de valeurs de paramètres angulaires caractéristiques de la géométrie de chaque roue, comportant pour chaque roue un bâti (5 ou 6 ou 7 ou 8) fixé à cette roue, des capteurs (27) solidaires du bâti (5) et fournissant respectivement sur des sorties, des signaux représentatifs des valeurs des paramètres caractéristiques de la roue, et un ensemble (9) de commande et de traitement, indépendant de chaque bâti et connectable auxdites sorties des capteurs (27), pour recevoir lesdits signaux représentatifs et pour obtenir lesdites valeurs de paramètres angulaires caractéristiques pour chaque roue, caractérisé en ce que :
- pour chaque bâti (5), il comporte un multiplexeur (23) relié aux sorties des capteurs (27) correspondant à ce bâti, un connecteur spécifique (32) du bâti relié au multiplexeur (23) pour recevoir lesdits signaux relatifs à la roue (1) correspondante, chaque connecteur spécifique (32) d'un bâti (5) étant relié à un connecteur supplémentaire (39, 40, 41) de chaque bâti (6, 7, 8) de chaque autre roue, par une ligne d'un bus bidirectionnel d'interconnexion (11, 12, 13),

- l'ensemble de commande et de traitement (9) est connecté par un bus de connexion (10), soit directement à un connecteur spécifique (32) d'un bâti (5) d'une roue prédéterminée (1), soit indirectement à ce connecteur spécifique (32) de la roue prédéterminée (1) par la connexion du bus de connexion (10) à l'un quelconque des connecteurs supplémentaire (39, 40, 41) des autres roues,

- et cet ensemble de commande et de traitement (9) transmet au multiplexeur (23) correspondant à la roue prédéterminée (1), des signaux de commande de sélection d'un ou plusieurs desdits signaux représentatifs des valeurs respectives de paramètres caractéristiques de la roue prédéterminée (1) et recevant ce ou ces signaux représentatifs pour les traiter et obtenir les valeurs des paramètres angulaires caractéristiques correspondants.

2. Appareil de contrôle selon la revendication 1, caractérisé en ce que l'ensemble de commande et de traitement (9) comporte un terminal de commande et de traitement portable, à microprocesseur incorporé, à écran de visualisation (61) et à clavier (60) de commande et de traitement, ce microprocesseur étant connectable par ledit bus de connexion (10) soit à un connecteur spécifique (32) d'une roue prédéterminée (1), soit à un connecteur supplémentaire (39, 40, 41) d'une autre roue (2, 3, 4) pour transmettre, au multiplexeur (23) de la roue prédéterminée (1), des signaux de commande de sélection de capteur et pour recevoir et traiter des signaux représentatifs de valeurs de paramètres caractéristiques de la roue prédéterminée (1) et pour obtenir ces valeurs.

3. Appareil selon la revendication 2 caractérisé en ce que le connecteur spécifique (32) et le connecteurs supplémentaire (47, 49, 54) de chaque bâti (5) sont reliés à un connecteur principal (62), l'appareil comportant en outre un circuit de gestion (14) relié connectable au connecteur principal (62) d'un bâti, par un bus principal (16), pour recevoir et enregistrer les valeurs de paramètres fournies par le microprocesseur du terminal (9) de commande et de traitement, ce circuit de gestion étant en outre relié à une imprimante (17) pour imprimer lesdites valeurs, et étant connectable à d'autres appareils de contrôle de véhicules et/ou à un ordinateur central.

4. Appareil selon la revendication 3, caractérisé en ce qu'il comporte en outre un terminal de visualisation (19) à écran relié au circuit de gestion (14) pour afficher des menus déroulants d'opérations de contrôle de géométrie à effectuer, ces menus étant déroulés et un menu étant sélectionné par un moyen de télécommande (20) du terminal de visualisation (19) ou par le clavier du terminal portable (9), tout menu sélectionné étant transmis au terminal portable (9) de commande et de traitement pour être affiché sur l'écran (21) de ce terminal de commande et de traitement.

5. Appareil selon la revendication 2, caractérisé en ce qu'il comporte en outre un terminal esclave portable (22) à écran de visualisation (68) et à clavier de dialogue (67) connectable par un bus de connexion (66) à un connecteur (41) d'une roue, lui-même relié par ledit but d'interconnexion à un connecteur (32) d'une autre roue auquel est connecté ledit terminal de commande et de traitement (9), l'écran de visualisation du terminal esclave portable (22) affichant des données affichées sur l'écran de visualisation du terminal de commande et de traitement (9) et le clavier du terminal esclave (22) commandant le dialogue avec le terminal de commande et de traitement (9) et le déroulement des menus sur l'écran du terminal de visualisation (19).

6. Appareil selon la revendication 2, caractérisé en ce que le terminal portable (9) de commande et de traitement est connectable à une imprimante pour imprimer les valeurs des paramètres caractéristiques.

FIG.1

FIG. 2

**Office européen
des brevets**

# RAPPORT DE RECHERCHE
# EUROPEENNE

Numéro de la demande

## EP 90 40 2866

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 570 178 (FMC) <br> * Page 6, ligne 28 - page 11, ligne 19; page 17, lignes 1-16; page 19, lignes 4-31; page 21, lignes 1-15; page 24, ligne 5 -page 25, ligne 16; page 31, lignes 13-27; fig. * | 1-4,6 | G 01 B <br> 21/26 |
| A | MACHINES PRODUCTION, vol. 12, no. 361, octobre 1983, page 882; "Centrale de mesure de montages multicotes" <br> * Page 882 * | 1 | |
| A | TECHNISCHES MESSEN, vol. 50, no. 5, mai 1983, pages 197-202; H. KIRSTEIN et al.: "Einsatz halbautomatischer Messvorrichtungen in der Fertigungsmesstechnik" <br> * Pages 200-202 * | 1-4,6 | |
| A | FR-A-2 622 072 (MARDON) <br> * En entier * | 1,2 | |

|  | DOMAINES TECHNIQUES RECHERCHES (Int. Cl.5) |
|---|---|
|  | G 01 B 21 <br> G 08 C 15 |

Le présent rapport de recherche a été établi pour toutes les revendications

| Lieu de la recherche | Date d'achèvement de la recherche | Examinateur |
|---|---|---|
| La Haye | 04 décembre 90 | RAMBOER P. |